# EUROPÄISCHE PATENTSCHRIFT

(11) **EP 2 876 337 B1**
(45) Veröffentlichungstag und Bekanntmachung des Hinweises auf die Patenterteilung: **29.03.2017**
(21) Anmeldenummer: 14003963.7
(22) Anmeldetag: 25.11.2014
(51) Int. Cl.: F16K 1/22, F16K 27/02

(54) **Absperrarmatur mit drehbar angeordneter Absperrscheibe**
Shut-off valve with rotatably mounted shut-off disc
Appareil de sectionnement doté d'une vanne d'arrêt rotative

(30) Priorität: 28.10.2013 DE 102013017839; 21.02.2014 DE 102014102290
(43) Veröffentlichungstag der Anmeldung: 27.05.2015
(73) Patentinhaber: Metso Flow Control Oy, 01380 Vantaa (FI)
(72) Erfinder: Pauer, Andreas, 86179 Augsburg (DE); Tschorn, Michael, 86507 Oberottmarshausen (DE)
(74) Vertreter: Patentship Patentanwaltsgesellschaft mbH

(56) Entgegenhaltungen:
- WO-A1-2013/164162
- CH-A5- 637 455
- FR-A- 1 029 746
- FR-A- 1 423 231

## Beschreibung

Die Erfindung betrifft eine Absperrarmatur mit einem Gehäuse, einem in dem Gehäuse angeordneten Ventilsitz und einer den Ventilsitz ansteuernden Absperrscheibe, die im Gehäuse um eine senkrecht zur Längsachse des Gehäuses angeordnete Drehachse zwischen einer Öffnungsstellung und einer Sperrstellung beidseitig drehbar gelagert ist, wobei die Absperrscheibe zwei in Längsrichtung der Drehachse voneinander beabstandete Lagerflansche aufweist, wobei zumindest einer der beiden Lagerflansche mit einer Antriebswelle drehfest verbunden ist, wobei die Absperrscheibe als Fachwerkträger mit einer fachwerkartigen Struktur ausgebildet ist, der aus einem den Ventilsitz ansteuernden und mit den Lagerflanschen versehenen Scheibenteller, insbesondere einem ebenen Scheibenteller, und mehreren Versteifungsrippen besteht, wobei die von den Versteifungsrippen gebildeten Fachwerkquerschnitte als offene Querschnitte ausgebildet sind, die in der Öffnungsstellung der Absperrscheibe von einem das Gehäuse durchströmenden Medium durchströmbar sind.

Eine Absperrarmatur mit einer als Fachwerkträger ausgebildeten Absperrscheibe ist aus der nachveröffentlichten WO 2013/164162 A1 bekannt.

Gattungsgemäße Absperrarmaturen mit einer als Fachwerkträger ausgebildeten Absperrscheibe, bei der die Fachwerkquerschnitte als offene Querschnitte ausgebildet sind, die in der Öffnungsstellung der Absperrscheibe von einem das Gehäuse durchströmenden Medium durchströmbar sind, sind aus der CH 637 455 A5, der FR 1 423 231 A und der FR 1 029 746 A bekannt.

Bei bekannten Absperrarmaturen sind zur beidseitigen Lagerung der Absperrscheibe im Gehäuse eine durchgehende Lagerwelle oder geteilte Lagerwellen vorgesehen, die mit der Absperrscheibe drehfest verbunden sind.

Bei einer Lagerung der Absperrscheibe mit einer einteiligen, durchgehenden Lagerwelle ist die Absperrscheibe mit einer Durchgangsbohrung versehen durch die die Lagerwelle hindurchgeführt ist, um die Absperrscheibe beidseitig im Gehäuse um die Drehachse drehbar zu lagern. Eine durchgehende Lagerwelle, die in einer Durchgangsbohrung der Absperrscheibe aufgenommen ist, erfordert jedoch einen großen Querschnitt und eine entsprechend große Dicke der Absperrscheibe im Bereich der Durchgangsbohrung zur Aufnahme der einteiligen Lagerwelle. In der Öffnungsstellung führt die große Dicke der Absperrscheibe zur einer Verringerung des durchströmbaren Gehäusequerschnitts des Gehäuses und somit zu einer Beschränkung des das Gehäuse durchströmenden Durchsatzes an Medium, so dass derartige Absperrarmaturen mit einer Absperrscheibe mit einer einteiligen Lagerwelle einen geringen Durchflussfaktor bzw. einen geringen Durchflusskoeffizient in der Öffnungsstellung aufweisen.

Um den Durchflussfaktor bzw. den Durchflusskoeffizient in der Öffnungsstellung der Absperrscheibe zu erhöhen, ist es bereits bekannt, eine geteilte Lagerwelle zur beidseitigen Lagerung der Absperrscheibe im Gehäuse vorzusehen.

Eine Absperrarmatur, die mittels einer geteilten Lagerwelle um eine senkrecht zur Längsachse des Gehäuses angeordnete Drehachse zwischen einer Öffnungsstellung und einer Sperrstellung drehbar gelagert ist, ist aus der EP 1 207 325 B1 bekannt. Bei der aus der EP 1 207 325 B1 bekannten Absperrarmatur ist die geteilte Lagerwelle jeweils in einem mit einer Aufnahmebohrung versehenen Lagerflansch der Absperrscheibe angeordnet und mit der Absperrscheibe drehfest verbunden. Die Lagerflansche sind hierbei jeweils am äußeren Randbereich der Absperrscheibe im Wesentlichen senkrecht zur Absperrscheibe angeordnet und erstrecken sich von der Absperrscheibe weg. Dadurch ist die Absperrscheibe im Wesentlichen als ebener Scheibenteller ausgebildet, an dem an den beiden gegenüberliegenden Randbereichen die Lagerflansche angeordnet sind. In der Sperrstellung der Absperrscheibe stehen an dem Scheibenteller der Absperrscheibe je nach Einsatzfall hohe Drücke an, wodurch sich der ebene Scheibenteller entsprechend verformen und verbiegen kann. Um hohe Verformungen und Verbiegungen des ebenen Scheibentellers zu vermeiden, die Nachteile hinsichtlich der Dichtigkeit der Absperrscheibe in der Sperrstellung nach sich ziehen, ist der ebene Scheibenteller entsprechend dick auszuführen, um ausreichende Steifigkeit gegen Verformungen und Verbiegungen bei anstehendem Druck in der Sperrstellung zu erzielen. Eine große Dicke des ebenen Scheibentellers führt jedoch in der Öffnungsstellung wiederum zu einer Verringerung des durchströmbaren Gehäusequerschnitts des Gehäuses und somit zu einer Beschränkung des das Gehäuse durchströmenden Durchsatzes an Medium, so dass derartige Absperrscheiben mit einer geteilten Lagerwelle ebenfalls einen geringen Durchflussfaktor bzw, einen geringen Durchflusskoeffizient in der Öffnungsstellung aufweisen.

Der vorliegenden Erfindung liegt die Aufgabe zugrunde, eine Absperrarmatur der eingangs genannten Gattung zur Verfügung stellen, die in der Sperrstellung eine hohe Dichtigkeit aufweist und in der Öffnungsstellung einen hohen Durchflusskoeffizient aufweist.

Diese Aufgabe wird erfindungsgemäß dadurch gelöst, dass die Außenkanten der Versteifungsrippen einen abgerundeten Querschnitt aufweisen. Mit einer als Fachwerkträger ausgebildeten Absperrscheibe, die aus dem den Ventilsitz ansteuernden ebenen Scheibenteller und mehreren den ebenen Scheibenteller aussteifenden Versteifungsrippen besteht, kann bei einer beidseitigen Lagerung der Absperrscheibe mit einer geteilten Lagerwelle ein biegesteifer und verformungssteifer Scheibenteller erzielt werden, der in der Sperrstellung bei anstehenden Drücken geringe Verformungen aufweist und somit eine hohe Dichtigkeit bietet. Durch die von den Versteifungsrippen gebildeten Verstrebungen, die die Verformungen des ebenen Scheibentellers reduzieren, kann die Dicke des Scheibentellers verringert werden, da die erforderliche Steifigkeit in Verbindung mit den Versteifungsrippen erzielt wird. Die Ausführung der Fachwerkquerschnitte des Fachwerkträgers zwischen dem Scheibenteller bzw. den Lagerflanschen und den Versteifungsrippen und somit die von den Versteifungsrippen ausgespannten Fachwerkquerschnitte des Fachwerkträgers als offene Querschnitte und somit als durchströmbare Querschnittsflächen, die in der Durchflussstellung der Absperrscheibe von Medium durchströmbar sind, führt dazu, dass in der Öffnungsstellung der Absperrscheibe die Dicke des Scheibentellers und die Dicke der Versteifungsrippen den Gehäusequerschnitts des Gehäuses nur geringfügig verringert, so dass die erfindungsgemäße Absperrarmatur einen hohen Durchflussfaktor bzw. einen hohen Durchflusskoeffizient in der Öffnungsstellung aufweist. Die Außenkanten der Versteifungsrippen werden in der Öffnungsstellung der Absperrscheibe von dem in dem Gehäuse strömenden Medium angeströmt und bilden somit in der Öffnungsstellung der Absperrscheibe die angeströmten Kanten der Versteifungsrippen. Durch abgerundete Querschnitte und somit abgerundete, die Anströmkanten bildenden Außenkanten der Versteifungsrippen weisen die in der Öffnungsstellung von dem Medium angeströmten Außenkanten eine strömungsgünstige Gestaltung auf, wodurch sich weitere Vorteile hinsichtlich eines hohen Durchflussfaktor bzw. eines hohen Durchflusskoeffizienten der Absperrarmatur in der Öffnungsstellung der Absperrscheibe ergeben.

Gemäß einer vorteilhaften Ausgestaltungsform der Erfindung sind die Lagerflansche jeweils am äußeren Randbereich des Scheibentellers im Wesentlichen senkrecht zum Scheibenteller angeordnet und erstrecken sich von dem Scheibenteller weg, wobei eine erste Versteifungsrippe vorgesehen ist, die die dem Scheibentellers abgewandten Endbereiche der Lagerflansche miteinander verbindet und die parallel oder geneigt zu dem Scheibenteller verläuft. Mit einer derartigen, bevorzugt parallel und beabstandet zu dem Scheibenteller verlaufenden Versteifungsrippe, die die beiden Lagerflansche an den dem Scheibenteller abgewandten Endbereichen miteinander verbindet, kann ein Aufbiegen der dem Scheibenteller abgewandten Endbereiche der Lagerflansche bei an dem Scheibenteller in der Sperrstellung anstehenden Druckkräften verringert werden und dadurch die Biegesteifigkeit und die Verformungssteifigkeit des Scheibentellers erhöht werden. In der ersten Versteifungsrippe treten hierbei je nach Lastrichtung an dem Scheibenteller gut zu beherrschende Zug- bzw. Druckkräfte auf.

Mit besonderem Vorteil weist die erste Versteifungsrippe in Längsrichtung der Versteifungsrippe einen taillierten Querschnitt oder einen im Wesentlichen konstanten Querschnitt auf. Hierdurch kann ein günstiger Kraftverlauf und Kraftfluss innerhalb der ersten Versteifungsrippe erzielt werden.

Gemäß einer vorteilhaften Weiterbildung der Erfindung ist eine zweite Versteifungsrippe vorgesehen, die sich von einem Mittelbereich des Scheibentellers zu dem Anschlussbereich des ersten Lagerflansches mit der ersten Versteifungsrippe erstreckt. Im Mittelbereich des Scheibentellers auftretende Druckkräfte bei in der Sperrstellung befindlicher Absperrscheibe können somit als gut zu beherrschende Druckkräfte über die zweite Versteifungsrippe in den ersten Lagerflansch eingeleitet und über die Lagerung der Absperrscheibe im Bereich des ersten Lagerflansches an das Gehäuse übertragen werden. Die zweite Versteifungsrippe kann hierbei mit dem dem Scheibenteller abgewandten Endbereich des ersten Lagerflansches oder mit dem an diesen Endbereich des ersten Lagerflansches angeschlossenen Endbereich der ersten Versteifungsrippe verbunden werden.

Gemäß einer vorteilhaften Weiterbildung der Erfindung ist weiterhin eine dritte Versteifungsrippe vorgesehen, die sich von einem Mittelbereich des Scheibentellers zu dem Anschlussbereich des zweiten Lagerflansches mit der ersten Versteifungsrippe erstreckt. Im Mittelbereich des Scheibentellers auftretende Druckkräfte bei in der Sperrstellung befindlicher Absperrscheibe können somit als gut zu beherrschende Druckkräfte über die dritte Versteifungsrippe in den zweiten Lagerflansch eingeleitet und über die Lagerung der Absperrscheibe im Bereich des zweiten Lagerflansches an das Gehäuse übertragen werden. Die dritte Versteifungsrippe kann hierbei mit dem dem Scheibenteller abgewandten Endbereich des zweiten Lagerflansches oder mit dem an diesen Endbereich des zweiten Lagerflansches angeschlossenen Endbereich der ersten Versteifungsrippe verbunden werden.

Hinsichtlich eines günstigen Kraftflusses ergeben sich besondere Vorteile, wenn gemäß einer Ausführungsform der Erfindung die zweite Versteifungsrippe und die dritte Versteifungsrippe jeweils in Längsrichtung der Versteifungsrippe einen von dem Anschlussbereich des Lagerflansches mit der ersten Versteifungsrippe zu dem Scheibenteller zunehmenden Querschnitt aufweisen.

Mit besonderem Vorteil weisen gemäß einer Weiterbildung der Erfindung die zweite Versteifungsrippe und die dritte Versteifungsrippe von dem Anschlussbereich des Lagerflansches mit der ersten Versteifungsrippe zu dem Scheibenteller einen gekrümmten oder geraden Außenkonturverlauf auf. Mit einem derartigen geradlinigen oder alternativ gekrümmten Außenkonturverlauf der zweiten und der dritten Versteifungsrippe wird auf einfache Weise erzielt, dass diese beiden Versteifungsrippen mit ihren Außenkonturen innerhalb einer Hüllkugel angeordnet sind, deren Mittelpunkt dem Mittelpunkt des Scheibentellers und deren Durchmesser dem Außendurchmesser des Scheibentellers entspricht. Hierdurch wird auf einfache Weise erzielt, dass die zusätzlichen Versteifungsrippen die Drehbewegung der Absperrscheibe im Gehäuse zwischen der Sperrstellung und der Durchflussstellung nicht behindern.

Hinsichtlich eines günstigen Kraftflusses ergeben sich besondere Vorteile, wenn gemäß einer Weiterbildung der Erfindung die zweite Versteifungsrippe und die dritte Versteifungsrippe mittig an dem Mittelbereich des Scheibentellers angeordnet sind.

Gemäß einer alternativen Weiterbildung der Erfindung kann ebenfalls ein günstiger Kraftflusses erzielt werden, wenn die zweite Versteifungsrippe und die dritte Versteifungsrippe zu dem Mittelbereich des Scheibentellers symmetrisch angeordnet sind und von dem Mittelbereich des Scheibentellers jeweils in Richtung zu dem Lagerflansch beabstandet angeordnet ist.

Gemäß einer vorteilhaften Ausgestaltungsform der Erfindung sind die Übergangsbereiche der ersten Versteifungsrippe zu den Lagerflanschen jeweils abgerundet. Hierdurch werden einerseits Vorteile hinsichtlich eines günstigen Kraftflusses erzielt und andererseits strömungsgünstige Übergangsbereiche erzielt, die einen hohen Durchflussfaktor bzw. einen hohen Durchflusskoeffizienten der Absperrarmatur in der Öffnungsstellung der Absperrscheibe ermöglichen.

Gemäß einer vorteilhaften Ausgestaltungsform der Erfindung sind die Übergangsbereiche der zweiten Versteifungsrippe und der dritten Versteifungsrippe zu dem Scheibenteller sowie zu dem Lagerflansch oder zu der ersten Versteifungsrippe jeweils abgerundet sind. Hierdurch werden ebenfalls Vorteile hinsichtlich eines günstigen Kraftflusses erzielt sowie strömungsgünstige Übergangsbereiche erzielt, die einen hohen Durchflussfaktor bzw. einen hohen Durchflusskoeffizienten der Absperrarmatur in der Öffnungsstellung der Absperrscheibe ermöglichen.

Die Absperrscheibe kann als Schweißbauteil ausgebildet werden.

Hinsichtlich einer einfachen und kostengünstigen Herstellung der Absperrscheibe ergeben sich besondere Vorteile, wenn die aus dem Scheibenteller, den Lagerflanschen und den Versteifungsrippen gebildete Absperrscheibe einstückig ausgebildet ist.

Hierbei ergeben sich weitere Vorteile, wenn die Absperrscheibe gemäß einer Ausgestaltungsform der Erfindung als Gussbauteil ausgebildet. In einem Gussverfahren kann auf einfache Weise die einstückig ausgebildete Absperrscheibe hergestellt werden sowie die strömungsgünstige abgerundete Gestaltung der Außenkanten und der Übergangsbereich der Versteifungsrippen erzeugt werden.

Gemäß einer Ausführungsform der Erfindung sind die Lagerflansche jeweils als Lagerösen zur Aufnahme einer Lagerwelle ausgebildet, die in dem Gehäuse drehbar gelagert ist. Die Absperrscheibe ist mit derartigen Lagerflanschen, die Lagerösen zur Aufnahme von jeweils einer Lagerwelle bilden, beispielsweise einer Einsteckwelle, die in dem Gehäuse drehbar gelagert sind, somit indirekt über die in den Lagerösen angeordneten beiden Lagerwellen einer geteilten Lagerwelle in dem Gehäuse beidseitig gelagert. Hierbei ist eine Lagerwelle als Antriebswelle ausgebildet, die über eine geeignete Welle-Nabe-Verbindung zur Drehmomentübertragung mit der Absperrscheibe verbunden ist.

Gemäß einer alternativen Ausführungsform der Erfindung sind die Lagerflansche jeweils mit einem Lagerwellenstummel versehen, mittels denen die Absperrscheibe in dem Gehäuse drehbar gelagert ist. Die Absperrscheibe ist somit mit einstückig angeformten Lagerwellenstummeln versehen, mittels denen die Absperrscheibe direkt im Gehäuse beidseitig gelagert ist. Die Lagerwellenstummel sind hierbei direkt an der Absperrscheibe angeformt, wodurch ein dreh- und biegesteifer Verbund zwischen den Lagerwellenstummeln und der den Ventilsitz ansteuerten Absperrscheibe erzielt wird, wodurch sich weitere Vorteile hinsichtlich einer hohen Dichtigkeit der Absperrscheibe in der Sperrstellung ergeben. Zudem kann der Aufbau der Absperrarmatur vereinfacht werden, da keine separaten Lagerwellen zur Lagerung der Absperrscheibe im Gehäuse erforderlich sind. Der Antrieb der Absperrscheibe kann hierbei auf einfache Weise durch eine als Steckwelle ausgebildete Antriebswelle erzielt werden, die drehbar im Gehäuse gelagert ist und über eine geeignete Welle-Nabe-Verbindung mit einem Lagerwellenstummel zur Drehmomentübertragung mit der Absperrscheibe verbunden ist.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Absperrarmatur in einer pespektivischen Darstellung,
- Figur 2: einen Längsschnitt entlang der Linie A-A der Figur 1,
- Figur 3: die Absperrscheibe der erfindungsgemäßen Absperrarmatur in einer Ansicht gemäß Pfeil B der Figur 2,
- Figur 4: die Absperrscheibe in einer Ansicht gemäß Pfeil C der Figur 3,
- Figur 5: einen Querschnitt der Absperrscheibe in einem Schnitt gemäß Linie D-D der Figur 4,
- Figuren 6 bis 8: mehrere perspektivische Darstellungen der Absperrscheibe der erfindungsgemäßen Absperrarmatur gemäß den Figuren 1 bis 5 und
- Figur 9: eine zweite Ausführungsform der Absperrscheibe in einem Längsschnitt gemäß der Figur 2.

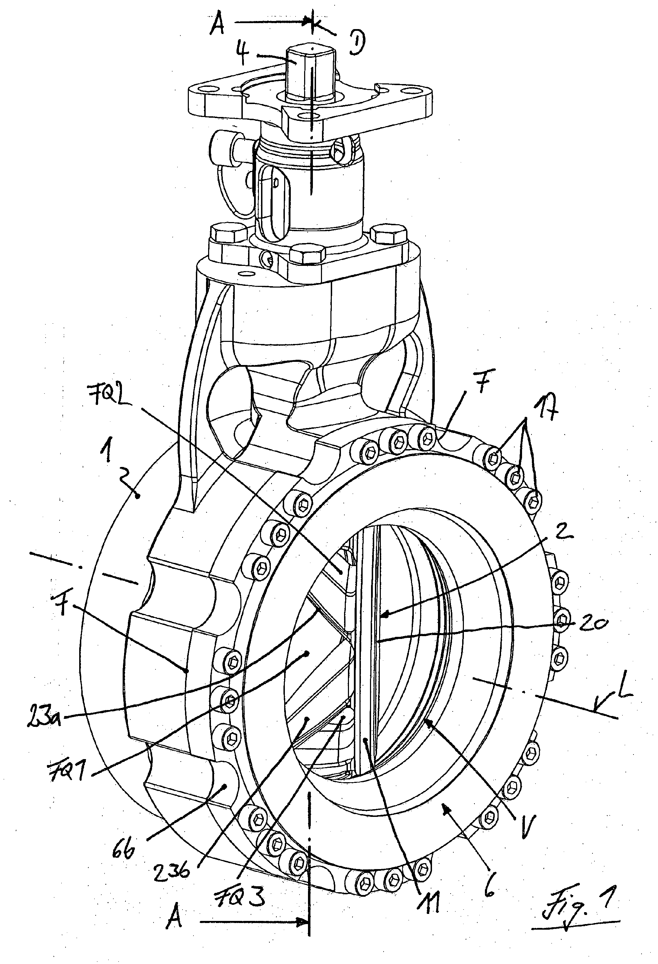

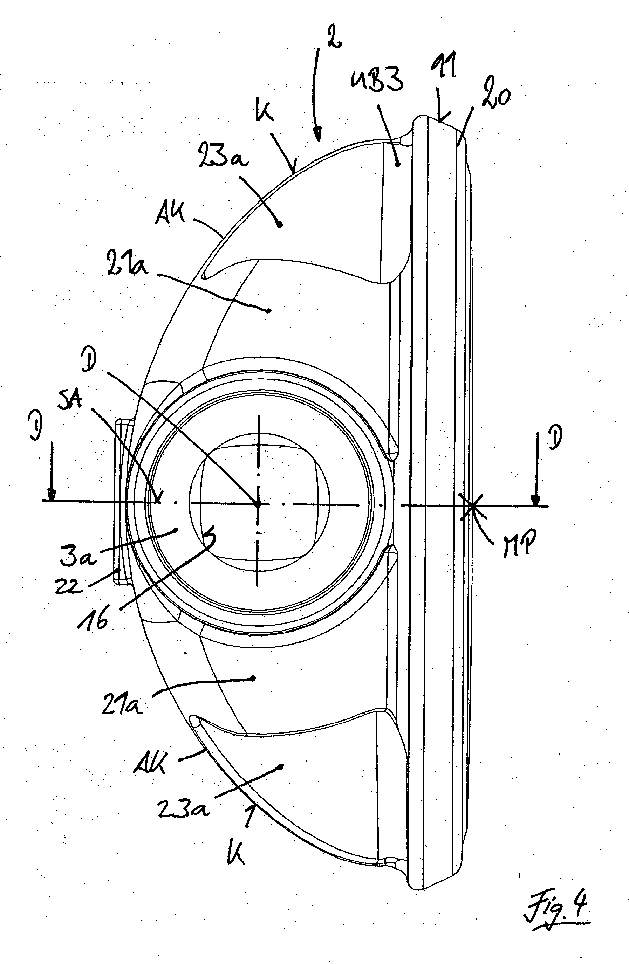

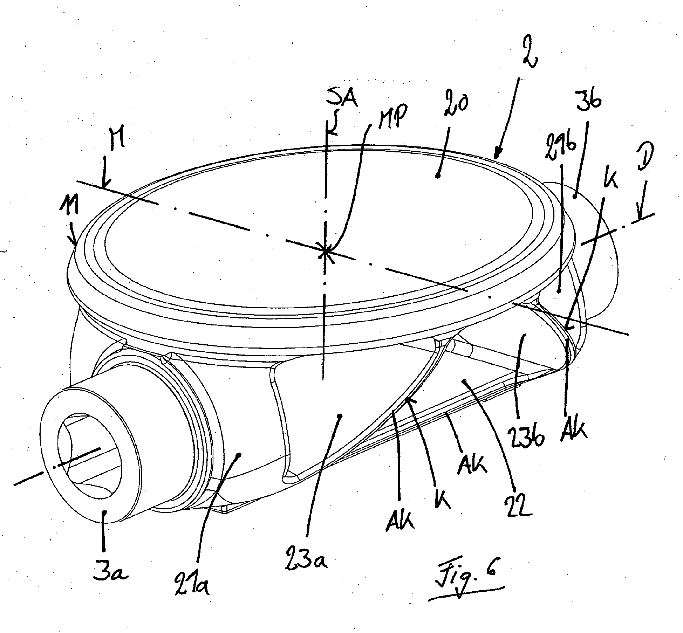

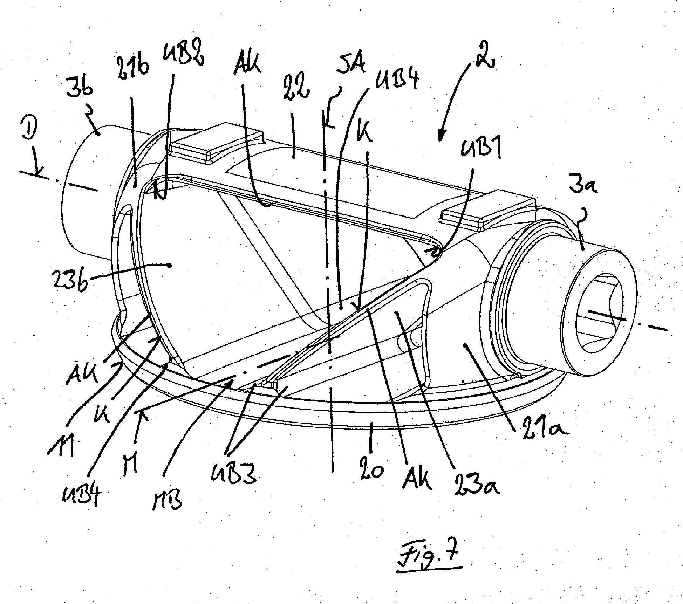

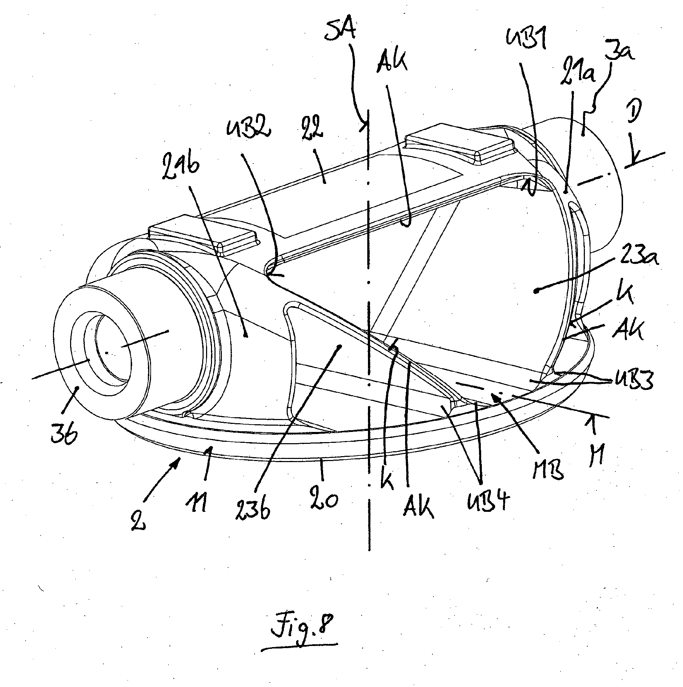

In den Figuren 1 bis 8 ist eine erste Ausführungsform einer erfindungsgemäßen Absperrarmatur dargestellt.

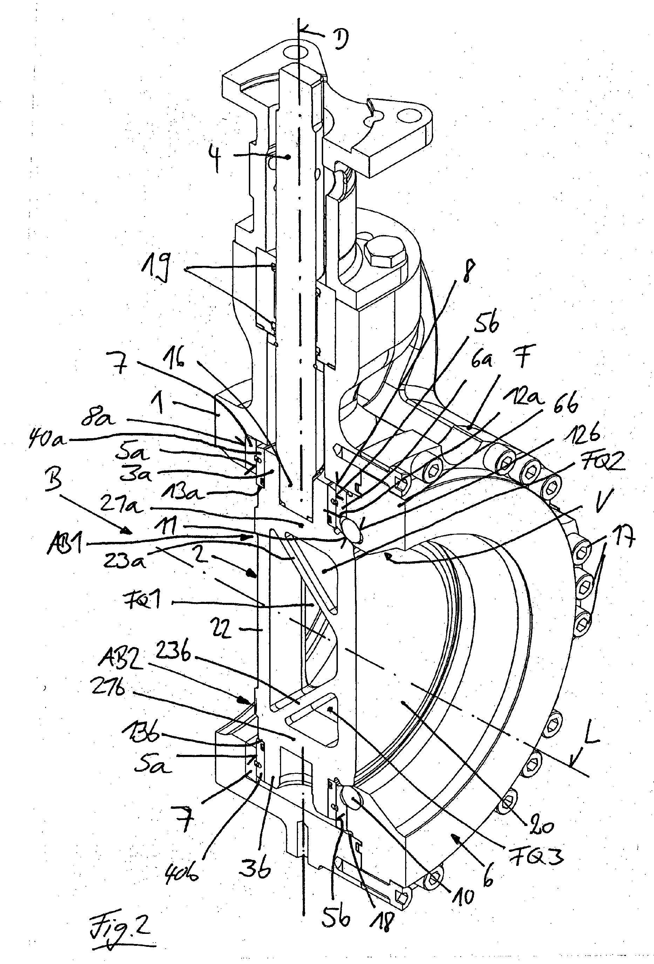

Die Absperrarmatur weist - wie in den Figuren 1 und 2 verdeutlicht ist - ein Gehäuse 1 auf, in dem eine Absperrscheibe 2 um eine senkrecht zur Längsachse L des Gehäuses 1 angeordnete Drehachse D drehbar gelagert ist. Die Absperrscheibe 2 ist bezüglich der Längsachse L des Gehäuses 1 beidseitig im Gehäuse 1 drehbar gelagert.

Die Absperrscheibe 2 ist im Gehäuse 1 mittels einer geteilten Lagerwelle beidseitig gelagert. In dem dargestellten Ausführungsbeispiel sind ein oberer Lagerwellenstummel 3a und ein unterer Lagerwellenstummel 3b einstückig und somit direkt an der Absperrscheibe 2 angeformt. Der obere Lagerwellenwellenstummel 3a steht weiterhin zum Antrieb mit einer Antriebswelle 4 in Verbindung.

In der Figur 1 ist die Absperrscheibe 2 in einer teilweise geöffneten Zwischenstellung dargestellt. Der Längsschnitt der Figur 2 zeigt die Absperrscheibe 2 in einer Sperrstellung, in der ein im Gehäuse 1 angeordneter Ventilsitz V von der Absperrscheibe 2 angesteuert und geschlossen ist.

Durch Verschwenken der Absperrscheibe 2 um einen Drehwinkel von 90° um die Drehachse D kann die Absperrscheibe 2 in eine Öffnungsstellung gebracht werden, in der die Absperrarmatur in Längsrichtung und somit entlang der Längsachse L des Gehäuses 1 als Durchflussrichtung von Medium durchströmbar ist.

Bei der dargestellten Absperrarmatur ist das Gehäuse 1 als einstückiges und ungeteiltes Gehäuse ausgebildet.

Zur Aufnahme und Lagerung der Lagerwellenstummel 3a, 3b sind jeweils zwei Lagerhalbschalen 5a, 5b vorgesehen, die den entsprechenden Lagerwellenstummel 3a, 3b um jeweils 180° umschlingen. Im dargestellten Ausführungsbeispiel ist zwischen jedem Lagerwellenstummel 3a bzw. 3b und den beiden Lagerhalbschalen 5a, 5b eine ringförmige Lagerbuchse 40a, 40b angeordnet. Die entsprechende Lagerbuchse 40a, 40b ist mittels jeweils einer Dichtungseinrichtung, beispielsweise eines O-Ringes, zu dem entsprechenden Lagerwellenstummel 3a, 3b abgedichtet.

Die Lagerhalbschalen 5a für die Lagerwellenstummel 3a, 3b der Absperrscheibe 2 sind ein einem Lagerring 7 ausgebildet. Die Lagerhalbschalen 5b für die Lagerwellenstummel 3a, 3b der Absperrscheibe 2 sind an einem Dichtring 6 ausgebildet, an dem weiterhin der von der Absperrscheibe 2 angesteuerte Ventilsitz V ausgebildet ist. Die Absperrscheibe 2 mit den angeformten Lagerwellenstummeln 3a, 3b, der mit den Lagerhalbschalen 5b versehene Dichtring 6 sowie der mit den Lagerhalbschalen 5a versehene Lagerring 7 können von einer stirnseitigen Flanschseite F aus in das Gehäuse 1 eingelegt und somit im Gehäuse 1 montiert werden.

Das Gehäuse 1 ist hierzu an der stirnseitigen Flanschseite F mit einer ringnut-förmigen Ausnehmung 8 versehen, in die der Lagerring 7, der Dichtring 6 und die mit angeformten Lagerwellenstummeln 3a, 3b versehene Absperrscheibe 2 von der Flanschseite F aus eingelegt werden können.

Im dargestellten Ausführungsbeispiel ist an dem Ventilsitz V eine elastische Dichtungseinrichtung 10, beispielsweise ein elastischer Dichtungsring, angeordnet, die am Dichtring 6 befestigt ist. Die Absperrscheibe 2 ist mit einer Dichtfläche 11 versehen, beispielsweise einer Kegelfläche, die in der Sperrstellung die Dichtungseinrichtung 10 ansteuert. Der Dichtring 6 ist zur Aufnahme der Dichtungseinrichtung 10 als geteilter Dichtring mit einem inneren Ring 6a und einem äußeren Ring 6b ausgebildet. In dem inneren Ring 6a und dem äußeren Ring 6b ist jeweils eine Ringnut 12a, 12b ausgebildet, die zusammen eine ringkanalartigen Aufnahmeraum bilden, in dem der Dichtungsring 10 eingelegt und gehalten ist.

Die Absperrscheibe 2 ist bevorzugt einfach-exzentrisch oder mehrfach, beispielsweise doppelt-exzentrisch, im Gehäuse 1 angeordnet. Die Absperrscheibe 2 ist mit der Dichtfläche 11 von der Drehachse D - wie in der Figur 2 ersichtlich ist - in Längsrichtung der Längsachse L der Absperrarmatur beabstandet, wodurch eine erste Exzentrizität gebildet ist. Durch eine seitliche Beabstandung der Drehachse D von einer senkrecht zur Längsachse L stehenden und die Längsachse L schneidenden Mittelachse des Gehäuses 1 kann eine zweite Exzentrizität gebildet werden.

Die Absperrscheibe 2 ist in Längsrichtung der Drehachse D mit einem axialen Freiheitsgrad gelagert. Zur Zentrierung der Absperrscheibe 2 in Längsrichtung der Drehachse D sind im Bereich der Lagerwellenstummel 3a, 3b jeweils Anlauflager 13a, 13b vorgesehen. Die Anlauflager 13a, 13b sind im dargestellten Ausführungsbeispiel von einem Anlaufbund an den Lagerbuchsen 40a, 40b gebildet, die zwischen den Lagerhalbschalen 5a, 5b und dem entsprechenden Lagerwellenstummel 3a, 3b angeordnet sind.

Die Antriebswelle 4 ist als drehbar im Gehäuse 1 angeordnete torsionssteife und biegeweiche Steckwelle ausgebildet. Die Antriebswelle 4 steht im dargestellten Ausführungsbeispiel mit dem oberen Lagerwellenstummel 3a in Verbindung und ist in den oberen Lagerwellenstummel 3a eingesteckt, wobei zwischen dem Lagerwellenstummel 3a und der Antriebswelle 4 eine drehmomentübertragende Steckverbindung 16 ausgebildet ist. Die Steckverbindung 16 ist bevorzugt von einem Polygon-Profil am Außenumfang der Antriebswelle 4 und einer Aufnahmeöffnung des Lagerwellenstummels 3a gebildet.

Der äußere Ring 6b des Dichtringes 6 ist an der Flanschseite F an dem Gehäuse 1 befestigt, wozu im dargestellten Ausführungsbeispiel mehrere Befestigungsschrauben 17 vorgesehen sind. Der Lagerring 7 und der innere Ring 6a werden über den äußeren Ring 6b an einen Nutgrund 8a der Ausnehmung 8 im Gehäuse 1 verklemmt, an dem sich der Lagerring 7 abstützt.

Um den Gehäuseinnenraum am Dichtring 6 gegenüber der Umgebung nach Außen abzudichten, ist zwischen dem Dichtring 6, bevorzugt dem äußeren Ring 6b und der nutförmigen Ausnehmung 8 des Gehäuses 1 eine Dichtungseinrichtung 18, beispielsweise ein als O-Ring ausgebildeter Dichtungsring, angeordnet.

Zur Abdichtung der Antriebswelle 4 nach Außen gegenüber der Umgebung ist eine entsprechende Abdichtung 19 vorgesehen, die beispielsweise von als O-Ringen ausgebildeten Dichtungsringen oder einer Stopfbuchspackung gebildet werden kann.

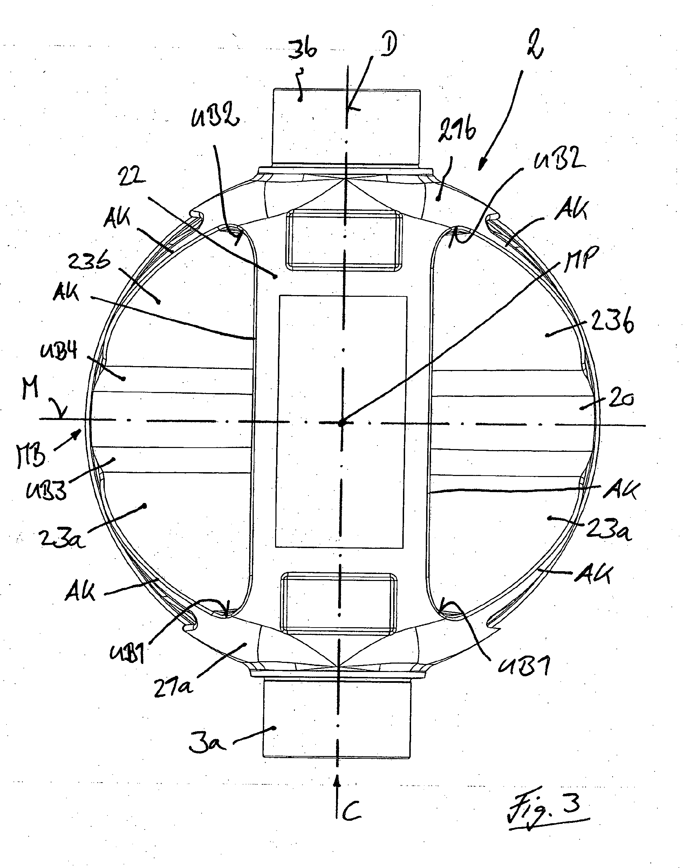

Die Absperrscheibe 2 besteht - wie in Verbindung mit den Figuren 3 bis 8 näher ersichtlich ist - aus einem mit der Dichtfläche 11 versehenen kreisförmigen und ebenen Scheibenteller 20 und zwei in Längsrichtung der Drehachse D voneinander beabstandeten Lagerflanschen 21a, 21b, mittels denen die Absperrscheibe 2 im Gehäuse 1 um die Drehachse D drehbar gelagert ist. Die Dichtfläche 11 ist im dargestellten Ausführungsbeispiel von einer Kegelfläche am Umfang des Scheibentellers 20 ausgeführt, die von einer Rückseite zu einer Vorderseite des Scheibentellers 20 geneigt verläuft. Die Lagerflansche 21a, 21b sind jeweils am äußeren Randbereich des Scheibentellers 20 im Wesentlichen senkrecht zum Scheibenteller 20 angeordnet und erstrecken sich von dem Scheibenteller 20 weg zu der der Dichtfläche 11 und somit dem dem Scheibenteller 20 abgewandten Seite und somit in Richtung zu der Drehachse D. Im dargestellten Ausführungsbeispiel sind die Lagerflansche 21 a, 21 b einstückig an der Rückseite des Scheibentellers 20 angeformt. Die Lagerflansche 21a, 21b sind in Längsrichtung der Drehachse D von einer Scheibenlängsachse SA beabstandet und verlaufen im dargestellten Ausführungsbeispiel parallel zu der Scheibenlängsachse SA. Die Scheibenlängsachse SA ist senkrecht zur Drehachse D angeordnet und verläuft durch den Mittelpunkt MP des kreisförmigen Scheibentellers 20. Im dargestellten Ausführungsbeispiel ist der Lagerwellenstummel 3a an der Außenfläche des Lagerflansches 21 a angeformt. In dem Lagerwellenstummel 3a ist eine bohrungsförmige Ausnehmung angeordnet, die die Steckverbindung 16 bildet und mit dem Polygon-Profil versehen ist. An der Außenfläche des Lagerflansches 21 b ist entsprechend der Lagerwellenstummel 3b angeformt.

Erfindungsgemäß ist die Absperrscheibe 2 mit den einstückig angeformten Lagerflanschen 21a, 21b als Fachwerkträger mit einer fachwerkartigen und biegesteifen Struktur ausgebildet, wobei die Absperrscheibe 2 zusätzlich zu dem Scheibenteller 20 und den Lagerflanschen 21 a, 21 b aus mehreren Versteifungsrippen 22, 23a, 23b besteht.

Die Absperrscheibe 2 umfasst eine erste Versteifungsrippe 22, die die dem Scheibenteller 20 abgewandten Endbereiche der beiden Lagerflansche 21a, 21b miteinander verbindet. Die erste Versteifungsrippe 22 ist hierzu mit den beiden Lagerflanschen 21 a, 21 b im Bereich der dem Scheibenteller 20 abgewandten Endbereiche der Lagerflansche 21 a, 21 b verbunden. Die erste Versteifungsrippe 22 verläuft im dargestellten Ausführungsbeispiel parallel zu dem Scheibenteller 20 und ist von dem Scheibenteller 20 und dessen Rückseite in Längsrichtung der Scheibenlängsachse SA beabstandet. Die Drehachse D ist hierbei in Längsrichtung der Scheibenlängsachse SA gesehen zwischen dem Scheibenteller 20 und der ersten Versteifungsrippe 22 angeordnet.

Die erste Versteifungsrippe 22 weist in Längsrichtung der Versteifungsrippe 22, d.h. in Richtung von dem Lagerflansch 21 a zu dem Lagerflansch 21b, im dargestellten Ausführungsbeispiel einen im Wesentlichen konstanten Querschnitt auf. Im dargestellten Ausführungsbeispiel weist die Versteifungsrippe 22 einen rechteckförmigen Querschnitt mit im Wesentlicher konstanter Breite und konstanter Dicke auf.

Die erfindungsgemäße Absperrscheibe 2 ist mit einer zweiten Versteifungsrippe 23a versehen, die sich von einem Mittelbereich MB des Scheibentellers 20 zu dem Anschlussbereich AB1 des ersten Lagerflansches 21a mit der ersten Versteifungsrippe 22 erstreckt. Im dargestellten Ausführungsbeispiel ist die zweite Versteifungsrippe 23a an den dem Scheibenteller 20 abgewandten Endbereich des Lagerflansches 21 a geführt und an diesem Endbereich mit dem Lagerflansch 21a verbunden.

Der Mittelbereich MB des Scheibentellers 20 ist der Bereich in Längsrichtung der Drehachse D um eine Mittelachse M der Absperrscheibe 2. Die Mittelachse M enthält den Mittelpunkt MP des kreisscheibenförmigen Scheibentellers 20 und ist senkrecht zur Drehachse D angeordnet.

Die zweite Versteifungsrippe 23a verläuft somit ausgehend von dem Scheibenteller 20 schräg und geneigt zur Drehachse D zu dem dem Scheibenteller 20 abgewandten Endbereich des Lagerflansches 21 a.

Die erfindungsgemäße Absperrscheibe 2 ist weiterhin mit einer dritten Versteifungsrippe 23b versehen, die sich von einem Mittelbereich MB des Scheibentellers 20 zu dem Anschlussbereich AB2 des zweiten Lagerflansches 21 b mit der ersten Versteifungsrippe 22 erstreckt. Im dargestellten Ausführungsbeispiel ist die dritte Versteifungsrippe 23b an den dem Scheibenteller 20 abgewandten Endbereich des Lagerflansches 21 b geführt und an diesem Endbereich mit dem Lagerflansch 21 b verbunden.

Die dritte Versteifungsrippe 23b verläuft somit ausgehend von dem Scheibenteller 20 schräg und geneigt zur Drehachse D zu dem dem Scheibenteller 20 abgewandten Endbereich des Lagerflansches 21 b.

Die zweite Versteifungsrippe 23a und die dritte Versteifungsrippe 23b sind im dargestellten Ausführungsbeispiel zu dem Mittelbereich MB des Scheibentellers 20 symmetrisch angeordnet und von dem Mittelbereich MB des Scheibentellers 20 jeweils in Richtung zu dem Lagerflansch 21 a bzw. 21 b beabstandet angeordnet. Die zu dem Lagerflansch 21 a geführte zweite Versteifungsrippe 23a ist hierzu von der Mittelachse M des Scheibentellers 20 in Richtung zu dem Lagerflansch 21 a beabstandet an dem Scheibenteller 20 angeordnet. Entsprechend ist die zu dem Lagerflansch 21 b geführte dritte Versteifungsrippe 23b von der Mittelachse M des Scheibentellers 20 in Richtung zu dem Lagerflansch 21 b beabstandet an dem Scheibenteller 20 angeordnet.

Die zweite Versteifungsrippe 23a und die dritte Versteifungsrippe 23b weisen jeweils in Längsrichtung der Versteifungsrippe 23a bzw. 23b einen von dem Anschlussbereich AB1 bzw. AB2 des Lagerflansches 21 a bzw. 21 b mit der ersten Versteifungsrippe 22 zu dem Scheibenteller 20 hin einen zunehmenden Querschnitt auf. Im dargestellten Ausführungsbeispiel weisen die Versteifungsrippen 23a, 23b einen rechteckförmigen Querschnitt mit gleichbleibender Dicke auf, wobei der Querschnitt von dem Lagerflansch 21 a bzw. 21 b zu dem Mittelbereich des Scheibentellers 20 in der Breite zunimmt. Die Breite der Versteifungsrippen 23a, 23b im Bereich des Lagerflansches 21, 21 b entspricht im Wesentlichen der Breite der Lagerflansche 21 a, 21 b. Die Versteifungsrippen 23a, 23b sind im Mittelbereich MB des Scheibentellers 20 bis zu den Außenrändern des Scheibentellers 20 geführt, wodurch sich eine zunehmende Breite der Versteifungsrippen 23a, 23b ergibt.

Die zweite Versteifungsrippe 23a und die dritte Versteifungsrippe 23b weisen im dargestellten Ausführungsbeispiel von dem Anschlussbereich AB1 bzw. AB2 des entsprechenden Lagerflansches 21 a, 21b zu der Rückseite des Scheibentellers 20 hin verlaufend einen gekrümmten, im Wesentlichen kugelförmig bzw. konvex gekrümmten, Außenkonturverlauf K der entsprechenden Außenkanten AK auf.

Erfindungsgemäß sind weiterhin die von den Versteifungsrippen 22, 23a, 23b gebildeten und aufgespannten Fachwerkquerschnitte FQ1, Q2, FQ3 des Fachwerkkörpers als offene Querschnitte ausgebildet, die in der Öffnungsstellung der Absperrscheibe 2 von einem das Gehäuse 1 durchströmenden Medium durchströmbar sind. Die erste Versteifungsrippe 22 bildet mit der zweiten Versteifungsrippe 23a und der dritten Versteifungsrippe 23b sowie dem Scheibenteller 20 einen offenen und von Medium durchströmbaren Fachwerkquerschnitt FQ1, der im dargestellten Ausführungsbeispiel im Wesentlichen V-förmig ist. Die zweite Versteifungsrippe 23a bildet mit dem Lagerflansch 21 a und dem Scheibenteller 20 einen offenen und von Medium durchströmbaren Fachwerkquerschnitte FQ2, der der im dargestellten Ausführungsbeispiel im Wesentlichen dreieck-förmig ist. Entsprechend bildet die dritte Versteifungsrippe 23b mit dem Lagerflansch 21 b und dem Scheibenteller 20 einen offenen und von Medium durchströmbaren Fachwerkquerschnitte FQ3, der der im dargestellten Ausführungsbeispiel im Wesentlichen dreieck-förmig ist.

Um in der Öffnungsstellung der Absperrscheibe 2 die Anströmverluste der Versteifungsrippen 22, 23a, 23b zu verringern, sind die Außenkanten AK der Versteifungsrippen 22, 23a, 23b mit einem abgerundeten Querschnitt versehen.

Weiterhin sind die Übergangsbereiche UB1, UB2 der ersten Versteifungsrippe 22 zu den Lagerflanschen 21a, 21b jeweils abgerundet, um die Anströmverluste in der Öffnungsstellung der Absperrscheibe 2 zu verringern.

Weiterhin sind um geringe Anströmverluste in der Öffnungsstellung der Absperrscheibe 2 zu erzielen, die Übergangsbereiche UB3, UB4 der zweiten Versteifungsrippe 23a und der dritten Versteifungsrippe 23b zu der Rückseite des Scheibentellers 22 sowie die Übergangsbereiche UB5, UB6 der zweiten Versteifungsrippe 23a und der dritten Versteifungsrippe 23b zu dem entsprechenden Lagerflansch 21a, 21b jeweils abgerundet.

Im dargestellten Ausführungsbeispiel ist die aus dem Scheibenteller 20, den Lagerflanschen 21 a, 21 b und den Versteifungsrippen 22, 23a, 23b bestehende Absperrscheibe 2 als einstückiges Bauteil ausgebildet, das bevorzugt als Gußbauteil ausgebildet ist.

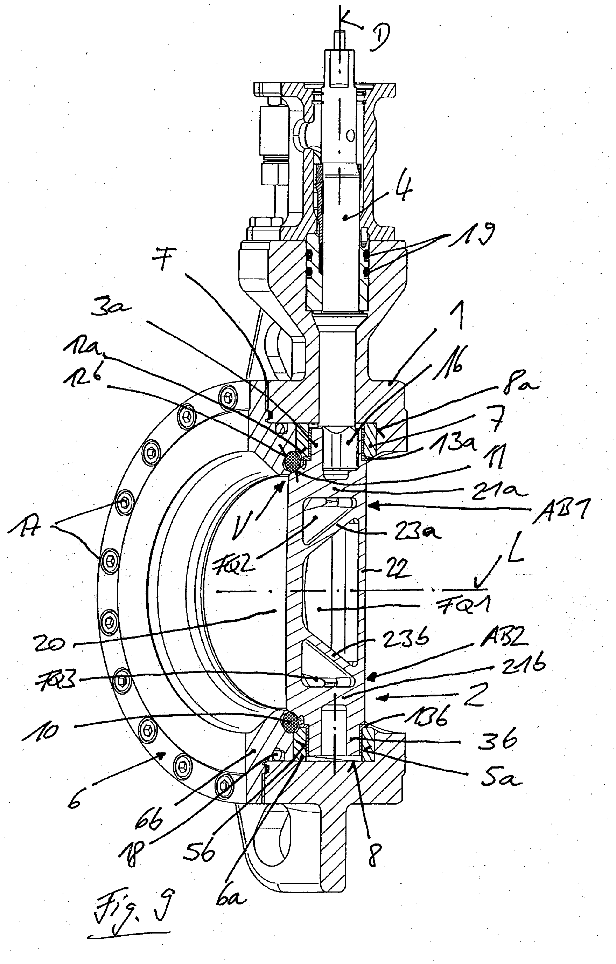

In der Figur 9 ist eine zweite Ausführungsform einer erfindungsgemäßen Absperrscheibe 2 dargestellt. Gleiche Bauteile sind hierbei mit gleichen Bezugsziffern versehen. Im Gegensatz zu dem Ausführungsbeispiel der Figuren 1 bis 8, bei dem die schräg verlaufenden Versteifungsrippen 23a bzw. 23b jeweils zu dem dem Scheibenteller 20 abgewandten Endbereich des Lagerflansches 21 a bzw. 21 b geführt und an diesen Endbereich mit dem Lagerflansch 21 a bzw. 21 b verbunden sind, sind bei dem Ausführungsbeispiel der Figur 9 die schräg verlaufenden Versteifungsrippen 23a, 23b an die erste Versteifungsrippe 22 geführt. Die zweite Versteifungsrippe 23a ist hierbei mit der ersten Versteifungsrippe 22 im Bereich des Endes am Anschlussbereichs AB1 verbunden, mit dem die erste Versteifungsrippe 22 mit dem ersten Lagerflansch 21 a verbunden ist. Entsprechend ist die dritte Versteifungsrippe 23b mit der ersten Versteifungsrippe 22 im Bereich des Endes am Anschlussbereichs AB2 verbunden, mit dem die erste Versteifungsrippe 22 mit dem zweiten Lagerflansch 21 b verbunden ist.

Die Absperrarmatur mit der erfindungsgemäßen Absperrscheibe 2 weist eine Reihe von Vorteilen auf.

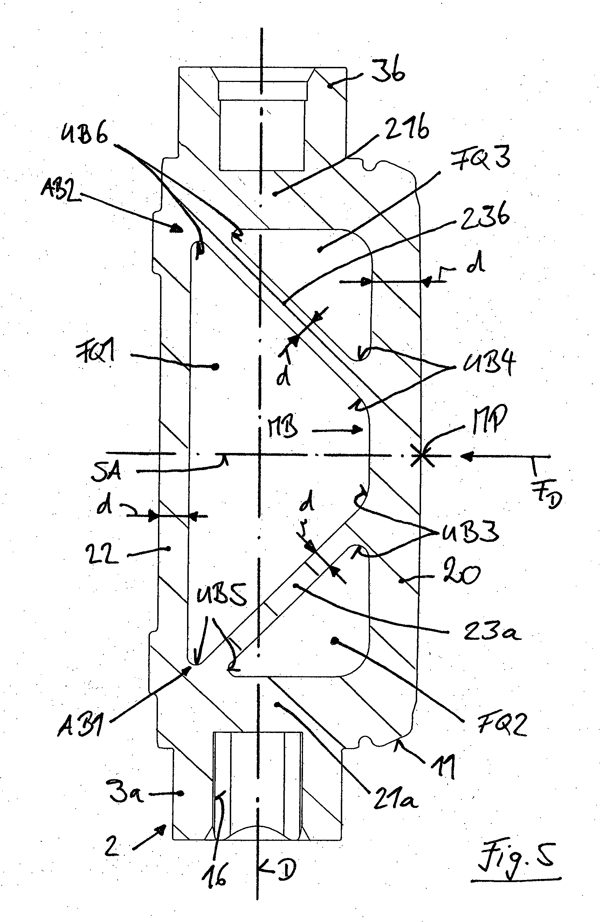

Die Versteifungsrippen 22, 23a, 23b bilden Verstrebungen zur Lastaufnahme und Verteilung der an dem Scheibenteller 20 in der Sperrstellung auftretenden Kräfte. Die an der Vorderseite des Scheibentellers 20 in der Sperrstellung auftretenden und anstehenden Druckkräfte F_{D}, die in der Figur 5 mit dem Pfeil verdeutlicht sind, können insbesondere von der schräg verlaufenden zweiten Versteifungsrippe 23a und der schräg verlaufenden dritten Versteifungsrippe 23b in Wirkrichtung aufgenommen werden und innerhalb der Versteifungsrippen 22, 23a, 23b in gut beherrschbare Druck- und Zugkräfte umgesetzt werden. Dadurch kann die Dicke d des ebenen Scheibentellers 20 verringert werden, wobei weiterhin aufgrund der in den Versteifungsrippen 22, 23a, 23b auftretenden Zug- und Druckkräften die Versteifungsrippen 22, 23a, 23b ebenfalls nur eine geringe Dicke d benötigen, um die Kräfte sicher übertragen zu können. Durch die offenen Fachwerkquerschnitten FQ1, FQ2, FQ3 in Verbindung mit der geringen Dicke d des Scheibentellers 20 und der Versteifungsrippen 22, 23a, 23b treten in der Öffnungsstellung der Absperrscheibe 2 durch den ebenen Scheibenteller 20 und die zusätzlichen Versteifungsrippen 22, 23a, 23b somit nur geringe Beeinträchtigungen des Gehäusequerschnitts des Gehäuses 1 auf, so dass die erfindungsgemäße Absperrarmatur einen hohen Durchflussfaktor bzw. einen hohen Durchflusskoeffizient in der Öffnungsstellung aufweist.

Durch die Versteifungsrippen 22, 23a, 23b und deren Anordnung werden somit die Verformungen des den gehäuseseitigen Ventilsitz V ansteuernden und mit der Dichtfläche 11 versehenen Scheibentellers 20 verringert, wodurch die Absperrarmatur eine hohe Dichtigkeit in der Sperrstellung aufweist.

Durch die einstückige Ausbildung der Lagerwellenstummel 3a, 3b an der Absperrscheibe 2 und dem Entfall einer Verbindung zwischen separaten Lagerwellen und der Absperrscheibe 2 entsteht ein dreh- und die biegesteifer Verbund von der Absperrscheibe 2 mit den angeformten Lagerwellenstummeln 3a, 3b und den Lagerstellen im Gehäuse 1, wodurch die Dichtigkeit der Absperrarmatur in der Sperrstellung weiter verbessert werden kann.

Die Erfindung ist nicht auf das dargestellte Ausführungsbeispiel der als Fachwerkträger ausgebildeten Absperrscheibe 2 mit an den Lagerflanschen 21 a, 21 b angeformten Lagerwellenstummeln 3a, 3b zur direkten Lagerung der Absperrscheibe 2 im Gehäuse 1 beschränkt. Alternativ können die Lagerflansche 21 a, 21 b mit bohrungsförmigen Lagerösen zur Aufnahme einer entsprechenden geteilten Lagerwelle versehen werden, wobei die beiden Lagerwellen jeweils im Gehäuse um die Drehachse D drehbar gelagert sind und mit dem Lagerflansch 21a bzw. 21 b drehfest verbunden sind. Hierdurch ergibt sich eine indirekte beidseitige Lagerung der Absperrscheibe über die beiden Lagerwellen und somit einer geteilten Lagerwelle im Gehäuse.

## Patentansprüche

1. Absperrarmatur mit einem Gehäuse (1), einem in dem Gehäuse (1) angeordneten Ventilsitz (V) und einer den Ventilsitz (V) ansteuernden Absperrscheibe (2), die im Gehäuse (1) um eine senkrecht zur Längsachse (L) des Gehäuses (1) angeordnete Drehachse (D) zwischen einer Öffnungsstellung und einer Sperrstellung beidseitig drehbar gelagert ist, wobei die Absperrscheibe (2) zwei in Längsrichtung der Drehachse (D) voneinander beabstandete Lagerflansche (21 a, 21b) aufweist, wobei zumindest einer der beiden Lagerflansche (21a; 21 b) mit einer Antriebswelle (4) drehfest verbunden ist, wobei die Absperrscheibe (2) als Fachwerkträger mit einer fachwerkartigen Struktur ausgebildet ist, der aus einem den Ventilsitz (V) ansteuernden und mit den Lagerflanschen (21 a, 21b) versehenen Scheibenteller (20), insbesondere einem ebenen Scheibenteller, und mehreren Versteifungsrippen (22, 23a, 23b) besteht, wobei die von den Versteifungsrippen (22, 23a, 23b) gebildeten Fachwerkquerschnitte (FQ1, FQ2, FQ3) als offene Querschnitte ausgebildet sind, die in der Öffnungsstellung der Absperrscheibe (2) von einem das Gehäuse (1) durchströmenden Medium durchströmbar sind, **dadurch gekennzeichnet, dass** die Außenkanten (AK) der Versteifungsrippen (22; 23a; 23b) einen abgerundeten Querschnitt aufweisen.

2. Absperrarmatur nach Anspruch 1, **dadurch gekennzeichnet, dass** die Lagerflansche (21a, 21b) jeweils am äußeren Randbereich des Scheibentellers (20) im Wesentlichen senkrecht zum Scheibenteller (20) angeordnet sind und sich von dem Scheibenteller (20) weg erstrecken, wobei eine erste Versteifungsrippe (22) vorgesehen ist, die die dem Scheibenteller (20) abgewandten Endbereiche der Lagerflansche (21a, 21 b) miteinander verbindet und die parallel oder geneigt zu dem Scheibenteller (22) verläuft.

3. Absperrarmatur nach Anspruch 2, **dadurch gekennzeichnet, dass** die erste Versteifungsrippe (22) in Längsrichtung der Versteifungsrippe (22) einen im wesentlichen konstanten Querschnitt oder einen taillierten Querschnitt aufweist.

4. Absperrarmatur nach Anspruch 2 oder 3, **dadurch gekennzeichnet, dass** eine zweite Versteifungsrippe (23a) vorgesehen ist, die sich von einem Mittelbereich (MB) des Scheibentellers (20) zu dem Anschlussbereich (AB1) des ersten Lagerflansches (21 a) mit der ersten Versteifungsrippe (22) erstreckt.

5. Absperrarmatur nach einem der Ansprüche 2 bis 4, **dadurch gekennzeichnet, dass** eine dritte Versteifungsrippe (23b) vorgesehen ist, die sich von einem Mittelbereich (MB) des Scheibentellers (20) zu dem Anschlussbereich (AB2) des zweiten Lagerflansches (21b) mit der ersten Versteifungsrippe (22) erstreckt.

6. Absperrarmatur nach Anspruch 4 oder 5, **dadurch gekennzeichnet, dass** die zweite Versteifungsrippe (23a) und die dritte Versteifungsrippe (23b) jeweils in Längsrichtung der Versteifungsrippe (23a; 23b) einen von dem Anschlussbereich (AB1; AB2) des Lagerflansches (21 a; 21 b) mit der ersten Versteifungsrippe (22) zu dem Scheibenteller (20) zunehmenden Querschnitt aufweisen.

7. Absperrarmatur nach einem der Ansprüche 4 bis 6, **dadurch gekennzeichnet, dass** die zweite Versteifungsrippe (23a) und die dritte Versteifungsrippe (23b) von dem Anschlussbereich (AB1; AB2) des Lagerflansches (21 a; 21 b) mit der ersten Versteifungsrippe (22) zu dem Scheibenteller (20) einen gekrümmten oder geraden Außenkonturverlauf (K) aufweisen.

8. Absperrarmatur nach einem der Ansprüche 4 bis 7, **dadurch gekennzeichnet, dass** die zweite Versteifungsrippe (23a) und die dritte Versteifungsrippe (23b) mittig an dem Mittelbereich (MB) des Scheibentellers (20) angeordnet sind.

9. Absperrarmatur nach einem der Ansprüche 4 bis 7, **dadurch gekennzeichnet, dass** die zweite Versteifungsrippe (23a) und die dritte Versteifungsrippe (23b) zu dem Mittelbereich (MB) des Scheibentellers (20) symmetrisch angeordnet sind und von dem Mittelbereich (MB) des Scheibentellers (20) jeweils in Richtung zu dem Lagerflansch (21a, 21b) beabstandet angeordnet ist.

10. Absperrarmatur nach einem der Ansprüche 2 bis 9, **dadurch gekennzeichnet, dass** die Übergangsbereiche (UB1, UB2) der ersten Versteifungsrippe (22) zu den Lagerflanschen (21 a, 21b) jeweils abgerundet sind.

11. Absperrarmatur nach einem der Ansprüche 4 bis 10, **dadurch gekennzeichnet, dass** die Übergangsbereiche (UB3, UB4, UB5, UB6) der zweiten Versteifungsrippe (23a) und der dritten Versteifungsrippe (23b) zu dem Scheibenteller (20) sowie zu dem Lagerflansch (21a, 21b) oder zu der ersten Versteifungsrippe (22) jeweils abgerundet sind.

12. Absperrarmatur nach einem der Ansprüche 1 bis 11, **dadurch gekennzeichnet, dass** der Scheibenteller (20) mit den Lagerflanschen (21a, 21 b) und den Versteifungsrippen (22, 23a, 23b) einstückig ausgebildet ist.

13. Absperrarmatur nach einem der Ansprüche 1 bis 12, **dadurch gekennzeichnet, dass** die Absperrscheibe (2) als Gussbauteil oder als Schweißbauteil ausgebildet ist.

14. Absperrarmatur nach einem der Ansprüche 1 bis 13, **dadurch gekennzeichnet, dass** die Lagerflansche (21a, 21b) jeweils als Lagerösen zur Aufnahme einer Lagerwelle ausgebildet sind, die in dem Gehäuse (1) drehbar gelagert ist.

15. Absperrarmatur nach einem der Ansprüche 1 bis 13, **dadurch gekennzeichnet, dass** die Lagerflansche (21a, 21b) jeweils mit einem Lagerwellenstummel (3a, 3b) versehen sind, mittels denen die Absperrscheibe (2) in dem Gehäuse (1) drehbar gelagert ist.

## Claims

1. Shut-off valve having a housing (1), a valve seat (V) arranged in the housing (1), and a shut-off disc (2) that activates the valve seat (V), said shut-off disc (2) being mounted in the housing (1) on both sides so as to be rotatable about a rotation axis (D) arranged perpendicularly to the longitudinal axis (L) of the housing (1) between an open position and a blocking position, wherein the shut-off disc (2) has two bearing flanges (21a, 21b) that are spaced apart from one another in the longitudinal direction of the rotation axis (D), wherein at least one of the two bearing flanges (21a; 21b) is connected to a drive shaft (4) for conjoint rotation, wherein the shut-off disc (2) is configured as a framework support having a framework-like structure, which consists of a disc plate (20), in particular a planar disc plate, that activates the valve seat (V) and is provided with the bearing flanges (21a, 21b), and a plurality of reinforcement ribs (22, 23a, 23b), wherein the framework cross sections (FQ1, FQ2, FQ3) formed by the reinforcement ribs (22, 23a, 23b) are configured as open cross sections through which a medium flowing through the housing (1) is able to flow in the open position of the shut-off disc (2), **characterized in that** the outer edges (AK) of the reinforcement ribs (22; 23a; 23b) have a rounded cross section.

2. Shut-off valve according to Claim 1, **characterized in that** the bearing flanges (21a, 21b) are each arranged on the outer peripheral region of the disc plate (20) substantially perpendicularly to the disc plate (20) and extend away from the disc plate (20), wherein a first reinforcement rib (22) is provided which connects together those end regions of the bearing flanges (21a, 21b) that are remote from the disc plate (20) and which extends parallel or at an angle to the disc plate (22).

3. Shut-off valve according to Claim 2, **characterized in that** the first reinforcement rib (22) has a substantially constant cross section or a tapered cross section in the longitudinal direction of the reinforcement rib (22).

4. Shut-off valve according to Claim 2 or 3, **characterized in that** a second reinforcement rib (23a) is provided which extends from a central region (MB) of the disc plate (20) to the connection region (AB1) of the first bearing flange (21a) to the first reinforcement rib (22).

5. Shut-off valve according to one of Claims 2 to 4, **characterized in that** a third reinforcement rib (23b) is provided which extends from a central region (MB) of the disc plate (20) to the connection region (AB2) of the second bearing flange (21b) to the first reinforcement rib (22).

6. Shut-off valve according to Claim 4 or 5, **characterized in that** the second reinforcement rib (23a) and the third reinforcement rib (23b) each have, in the longitudinal direction of the reinforcement rib (23a; 23b), a cross section that increases in size from the connection region (AB1; AB2) of the bearing flange (21a; 21b) to the first reinforcement rib (22) to the disc plate (20).

7. Shut-off valve according to one of Claims 4 to 6, **characterized in that** the second reinforcement rib (23a) and the third reinforcement rib (23b) have a curved or straight outer contour profile (K) from the connection region (AB1; AB2) of the bearing flange (21a; 21b) to the first reinforcement rib (22) to the disc plate (20).

8. Shut-off valve according to one of Claims 4 to 7, **characterized in that** the second reinforcement rib (23a) and the third reinforcement rib (23b) are arranged centrally in the central region (MB) of the disc plate (20).

9. Shut-off valve according to one of Claims 4 to 7, **characterized in that** the second reinforcement rib (23a) and the third reinforcement rib (23b) are arranged symmetrically with respect to the central region (MB) of the disc plate (20) and are each arranged at a distance from the central region (MB) of the disc plate (20) in the direction of the bearing flange (21a, 21b).

10. Shut-off valve according to one of Claims 2 to 9, **characterized in that** the transition regions (UB1, UB2) of the first reinforcement rib (22) to the bearing flanges (21a, 21b) are each rounded.

11. Shut-off valve according to one of Claims 4 to 10, **characterized in that** the transition regions (UB3, UB4, UB5, UB6) of the second reinforcement rib (23a) and of the third reinforcement rib (23b) to the disc plate (20) and to the bearing flange (21a, 21b) or to the first reinforcement rib (22) are each rounded.

12. Shut-off valve according to one of Claims 1 to 11, **characterized in that** the disc plate (20) is formed in one piece with the bearing flanges (21a, 21b) and the reinforcement ribs (22, 23a, 23b).

13. Shut-off valve according to one of Claims 1 to 12, **characterized in that** the shut-off disc (2) is configured as a cast component or a welded component.

14. Shut-off valve according to one of Claims 1 to 13, **characterized in that** the bearing flanges (21a, 21b) are each configured as bearing eyelets for receiving a bearing shaft which is mounted in the housing (1) so as to be rotatable.

15. Shut-off valve according to one of Claims 1 to 13, **characterized in that** the bearing flanges (21a, 21b) are each provided with a bearing shaft journal (3a, 3b), by means of which the shut-off disk (2) is mounted in the housing (1) so as to be rotatable.

## Revendications

1. Robinet d'arrêt comprenant un boîtier (1), un siège de soupape (V) disposé dans le boîtier (1) et un disque d'arrêt (2) commandant le siège de soupape (V), qui est supporté de manière rotative des deux côtés entre une position d'ouverture et une position d'arrêt dans le boîtier (1) autour d'un axe de rotation (D) disposé perpendiculairement à l'axe longitudinal (L) du boîtier (1), le disque d'arrêt (2) présentant deux brides de palier (21a, 21b) espacées l'une de l'autre dans la direction longitudinale de l'axe de rotation (D), au moins l'une des deux brides de palier (21a ; 21b) étant connectée de manière solidaire en rotation à un arbre d'entraînement (4), le disque d'arrêt (2) étant réalisé sous forme de support en treillis avec une structure de type treillis, qui se compose d'un plateau de disque (20) commandant le siège de soupape (V) et pourvu des brides de palier (21a, 21b), en particulier d'un plateau de disque plan, et de plusieurs nervures de renforcement (22, 23a, 23b), les sections transversales de treillis (FQ1, FQ2, FQ3) formées par les nervures de renforcement (22, 23a, 23b) étant réalisées sous forme de sections transversales ouvertes qui peuvent être traversées par un milieu s'écoulant à travers le boîtier (1) dans la position d'ouverture du disque d'arrêt (2), **caractérisé en ce que** les arêtes extérieures (AK) des nervures de renforcement (22 ; 23a ; 23b) présentent une section transversale arrondie.

2. Robinet d'arrêt selon la revendication 1, **caractérisé en ce que** les brides de palier (21a, 21b) sont disposées à chaque fois au niveau de la région de bord extérieure du plateau de disque (20) essentiellement perpendiculairement au plateau de disque (20) et s'étendent à l'écart du plateau de disque (20), une première nervure de renforcement (22) étant prévue, laquelle relie l'une à l'autre les régions d'extrémité opposées au plateau de disque (20) des brides de palier (21a, 21b) et s'étend parallèlement ou de manière inclinée par rapport au plateau de disque (22).

3. Robinet d'arrêt selon la revendication 2, **caractérisé en ce que** la première nervure de renforcement (22) présente, dans la direction longitudinale de la nervure de renforcement (22), une section transversale essentiellement constante ou une section transversale effilée.

4. Robinet d'arrêt selon la revendication 2 ou 3, **caractérisé en ce qu'**une deuxième nervure de renforcement (23a) est prévue, laquelle s'étend depuis une région centrale (MB) du plateau de disque (20) jusqu'à la région de raccordement (AB1) de la première bride de palier (21a) avec la première nervure de renforcement (22).

5. Robinet d'arrêt selon l'une quelconque des revendications 2 à 4, **caractérisé en ce qu'**une troisième nervure de renforcement (23b) est prévue, laquelle s'étend depuis une région centrale (MB) du plateau de disque (20) jusqu'à la région de raccordement (AB2) de la deuxième bride de palier (21b) avec la première nervure de renforcement (22).

6. Robinet d'arrêt selon la revendication 4 ou 5, **caractérisé en ce que** la deuxième nervure de renforcement (23a) et la troisième nervure de renforcement (23b) présentent à chaque fois dans la direction longitudinale de la nervure de renforcement (23a ; 23b) une section transversale augmentant depuis la région de raccordement (AB1 ; AB2) de la bride de palier (21a ; 21b) avec la première nervure de renforcement (22) jusqu'au plateau de disque (20).

7. Robinet d'arrêt selon l'une quelconque des revendications 4 à 6, **caractérisé en ce que** la deuxième nervure de renforcement (23a) et la troisième nervure de renforcement (23b) présentent une allure de contour extérieur courbe ou droite (K) depuis la région de raccordement (AB1 ; AB2) de la bride de palier (21a ; 21b) avec la première nervure de renforcement (22) jusqu'au plateau de disque (20).

8. Robinet d'arrêt selon l'une quelconque des revendications 4 à 7, **caractérisé en ce que** la deuxième nervure de renforcement (23a) et la troisième nervure de renforcement (23b) sont disposées centralement au niveau de la région centrale (MB) du plateau de disque (20).

9. Robinet d'arrêt selon l'une quelconque des revendications 4 à 7, **caractérisé en ce que** la deuxième nervure de renforcement (23a) et la troisième nervure de renforcement (23b) sont disposées de manière symétrique par rapport à la région centrale (MB) du plateau de disque (20) et sont disposées à distance de la région centrale (MB) du plateau de disque (20) à chaque fois dans la direction de la bride de palier (21a, 21b).

10. Robinet d'arrêt selon l'une quelconque des revendications 2 à 9, **caractérisé en ce que** les régions de transition (UB1, UB2) de la première nervure de renforcement (22) sont à chaque fois arrondies vers les brides de palier (21a, 21b).

11. Robinet d'arrêt selon l'une quelconque des revendications 4 à 10, **caractérisé en ce que** les régions de transition (UB3, UB4, UB5, UB6) de la deuxième nervure de renforcement (23a) et de la troisième nervure de renforcement (23b) sont à chaque fois arrondies vers le plateau de disque (20) ainsi que vers la bride de palier (21a, 21b) ou vers la première nervure de renforcement (22).

12. Robinet d'arrêt selon l'une quelconque des revendications 1 à 11, **caractérisé en ce que** le plateau de disque (20) est réalisé d'une seule pièce avec les brides de palier (21a, 21b) et les nervures de renforcement (22, 23a, 23b).

13. Robinet d'arrêt selon l'une quelconque des revendications 1 à 12, **caractérisé en ce que** le disque d'arrêt (2) est réalisé sous forme de composant coulé ou sous forme de composant soudé.

14. Robinet d'arrêt selon l'une quelconque des revendications 1 à 13, **caractérisé en ce que** les brides de palier (21a, 21b) sont à chaque fois réalisées sous forme d'oeil de palier pour recevoir un arbre de palier qui est supporté à rotation dans le boîtier (1).

15. Robinet d'arrêt selon l'une quelconque des revendications 1 à 13, **caractérisé en ce que** les brides de palier (21a, 21b) sont à chaque fois pourvues d'un bout d'arbre de palier (3a, 3b), au moyen desquels bouts d'arbre de palier le disque d'arrêt (2) est supporté à rotation dans le boîtier (1).
